# EUROPÄISCHE PATENTANMELDUNG

(11) **EP 2 249 067 A1**
(43) Veröffentlichungstag der Anmeldung: **10.11.2010**
(21) Anmeldenummer: 10156990.3
(22) Anmeldetag: 19.03.2010
(51) Int. Cl.: F16K 1/22, F16K 1/24

(54) **Klappenscheibenventil**

(30) Priorität: 04.05.2009 US 215300 P
(71) Anmelder: Zwick, Johann, 58256 Ennepetal (DE)
(72) Erfinder: Zwick, Johann, 58256 Ennepetal (DE)
(74) Vertreter: Patentanwälte Dr. Solf & Zapf

(57) **Zusammenfassung**

Klappenscheibenventil (1) für Druckmedien, bestehend aus einem Gehäuse (2) mit einem Durchlass (4) für das Medium und aus einer als Absperrorgan innerhalb des Durchlasses (4) angeordneten Klappenscheibe(6). Die Klappenscheibe (6) ist über eine zweiseitig drehbar gelagerte und sich quer durch den Durchlass (4) erstreckende Welle (10) um eine Drehachse (12) derart verschwenkbar, dass sie in einer Öffnungsstellung mit ihrer Scheibenebene etwa entsprechend der Durchlass-Richtung ausgerichtet ist und in einer quer zur Durchlass-Richtung stehenden Absperrstellung umfangsgemäß dichtend mit einem gehäuseseitigen Dichtsitz (16) zusammenwirkt. Die Klappenscheibe (6) ist mit der Welle (10) derart in Wellen-Querrichtung relativbeweglich verbunden, dass die Klappenscheibe (6) in der Absperrstellung durch eine weitergehende Drehung der Welle (10) relativ zu der axialfest gelagerten Welle (10) weitergehend gegen den Dichtsitz (16) bewegbar ist.

## Beschreibung

### "Klappenscheibenventil"

Die vorliegende Erfindung betrifft gemäß dem Oberbegriff des Anspruchs 1 ein Klappenscheibenventil zum Absperren von Strömungsleitungen für beliebige, d. h. gasförmige oder flüssige Druckmedien, bestehend aus einem Gehäuse mit einem Durchlass für das Medium und aus einer als Absperrorgan innerhalb des Durchlasses angeordneten Klappenscheibe, die über eine zweiseitig drehbar gelagerte und sich quer durch den Durchlass erstreckende Welle um eine Drehachse derart verschwenkbar ist, dass sie in einer Öffnungsstellung mit ihrer Scheibenebene etwa entsprechend der Durchlass-Richtung ausgerichtet ist und in einer quer zur Durchlass-Richtung stehenden Absperrstellung umfangsgemäß dichtend mit einem gehäuseseitigen Dichtsitz zusammenwirkt.

Derartige Klappenscheibenventile sind bekannt, wozu beispielhaft auf die Dokumente DE 298 22 791 U1 sowie EP 1 233 216 B1 und die korrespondierende US 6 595 488 B2 verwiesen wird. Die darin jeweils beschriebenen Ventile haben sich im praktischen Einsatz gut bewährt. Allerdings hat sich gezeigt, dass insbesondere bei Einsatz im Tieftemperaturbereich, wie z. B. in Leitungen für Flüssiggase bei Temperaturen um die minus 180° bis minus 200°, in der Absperrstellung Undichtigkeiten auftreten können.

Der vorliegenden Erfindung liegt die Aufgabe zu Grunde, ein Klappenscheibenventil der genannten Art so zu verbessern, dass weitgehend unabhängig von dem jeweiligen Anwendungsfall, und zwar insbesondere auch bei Einsatz im Tieftemperaturbereich, eine verbesserte Dichtigkeit in der Absperrstellung gewährleistet werden kann. Erfindungsgemäß wird dies durch die Merkmale des Anspruchs 1 erreicht. Vorteilhafte Ausgestaltungsmerkmale sind in den abhängigen Ansprüchen und der anschließenden Beschreibung enthalten.

Erfindungsgemäß ist demnach die Klappenscheibe mit der Welle derart in Wellen-Querrichtung relativbeweglich verbunden, dass die Klappenscheibe in der Absperrstellung durch eine weitergehende Drehung der Welle relativ zu der axialfest gelagerten Welle weitergehend gegen den Dichtsitz bewegbar ist. Dadurch kann vorteilhafterweise eine kältebedingte Materialschrumpfung kompensiert werden, indem die Klappenscheibe relativ zu der Welle weiter gegen den - bevorzugt konischen - Dichtsitz gepresst werden kann.

Anhand eines bevorzugten, in der Zeichnung veranschaulichten Ausführungsbeispiels soll die Erfindung im Folgenden genauer erläutert werden. Dabei zeigen:
- Fig. 1: eine Vorderansicht eines erfindungsgemäßen Klappenscheibenventils in der Absperrstellung seiner Klappenscheibe und auf deren Lagerseite,
- Fig. 2: einen Teil-Axialschnitt in der Schnittebene II-II gemäß Fig. 1,
- Fig. 3: einen Teil-Querschnitt in der Ebene III-III gemäß Fig. 1 ohne Darstellung der Welle,
- Fig. 4: eine vergrößerte Darstellung wie in Fig. 3 zur weiteren Erläuterung von bevorzugten Ausgestaltungsmerkmalen,

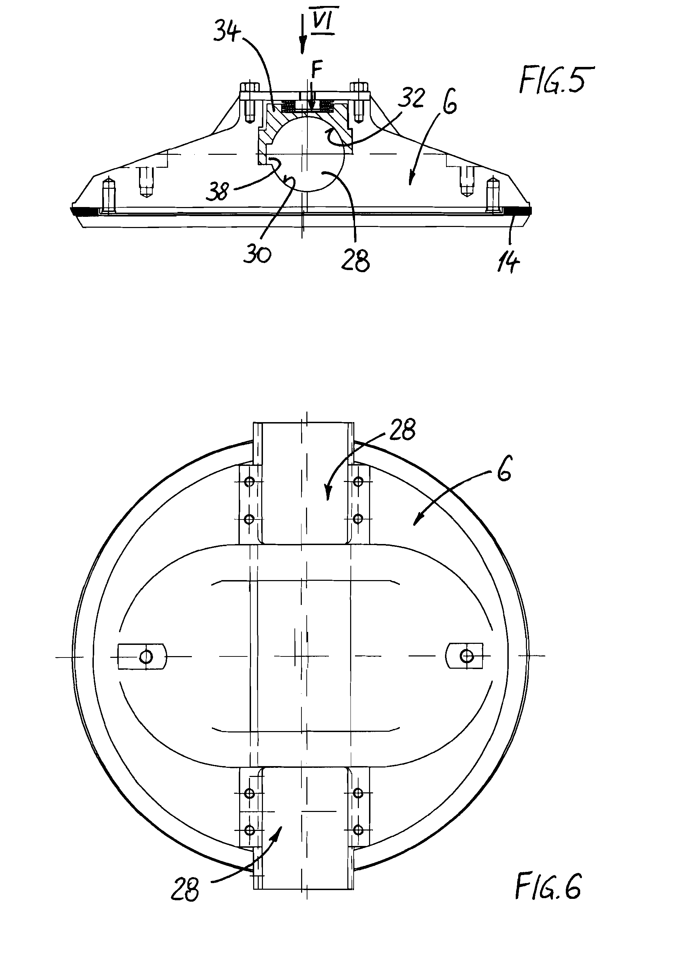

- Fig. 5: eine gesonderte Darstellung der Klappenscheibe in einer teilgeschnitte- nen Ansicht in Richtung der Drehachse der - hier selbst nicht dargestellten - Welle,
- Fig. 6: eine Draufsicht der Klappenscheibe in Pfeilrichtung VI gemäß Fig. 5 unter Weglassung bestimmter Einzelteile,
- Fig. 7: eine vergrößerte und in der Zeichnungsebene gedrehte Darstellung der Klappenscheibe wie in Fig. 5, und zwar in einem ihrer Öffnungsstellung entsprechenden Zustand,
- Fig. 8: eine Darstellung analog zu Fig. 7, jedoch in einem der Absperrstellung entsprechenden Zustand und
- Fig. 9: eine Ausschnittvergrößerung aus Fig. 8 zur weiteren Verdeutlichung der Erfindung.

In den verschiedenen Figuren der Zeichnung sind gleiche Teile stets mit den gleichen Bezugszeichen versehen und werden daher in der Regel auch jeweils nur einmal beschrieben.

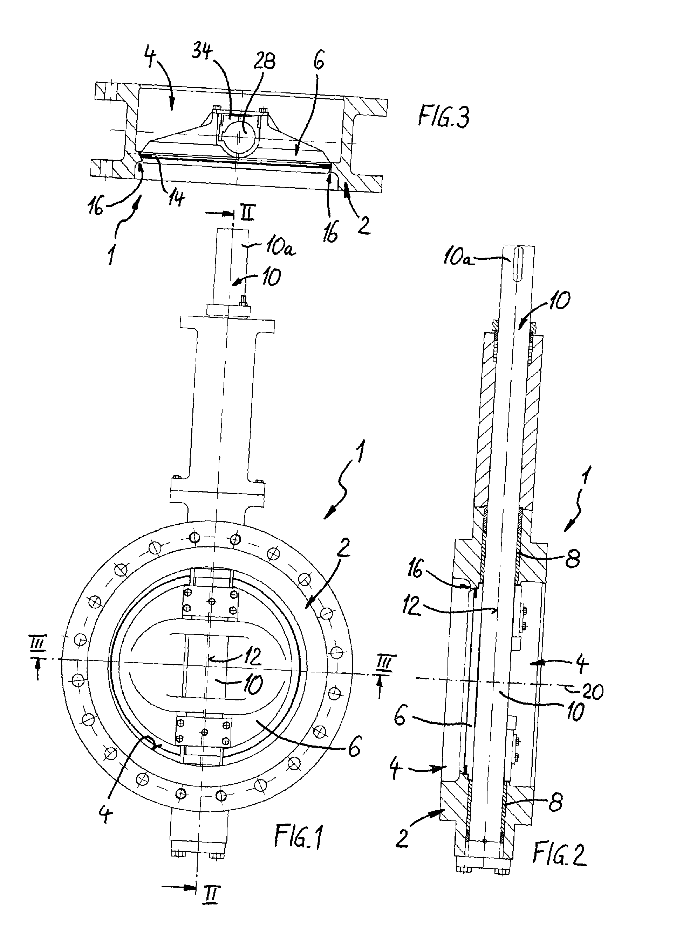

Ein erfindungsgemäßes Klappenscheibenventil 1 besteht aus einem im Wesentlichen ringförmigen Gehäuse 2 mit einem Durchlass 4 (siehe Fig. 2 bis 4) für ein Medium sowie aus einer als Absperrorgan innerhalb des Durchlasses 4 angeordneten, im Wesentlichen kreisförmigen Klappenscheibe 6. Diese Klappenscheibe 6 ist über eine auf einer Scheibenseite angeordnete, zweiseitig in gehäuseseitigen Drehlagern 8 geführte und sich quer durch den Durchlass 4 erstreckende Welle 10 um eine bezüglich der Scheiben-Kreisform quer verlaufende Drehachse 12 derart verdrehbar oder zutreffender gesagt verschwenkbar, dass sie in einer Öffnungsstellung (in der Zeichnung nicht dargestellt) mit ihrer Scheibenebene etwa entsprechend der Durchlass-Richtung bzw. dazu etwa parallel verläuft und in der in Fig. 1 bis 4 jeweils dargestellten Absperrstellung den Durchlass 4 verschließend mit einem äußeren umfangsgemäßen Dichtelement 14 dichtend mit einem gehäuseseitigen umfangsgemäßen Dichtsitz 16 zusammenwirkt. Die Welle 10 ist einseitig mit einem Betätigungsende 10a aus dem Gehäuse 2 nach außen geführt, damit die Klappenscheibe 6 über die Welle 10 mittels eines geeigneten Antriebselementes (nicht dargestellt) bewegt werden kann.

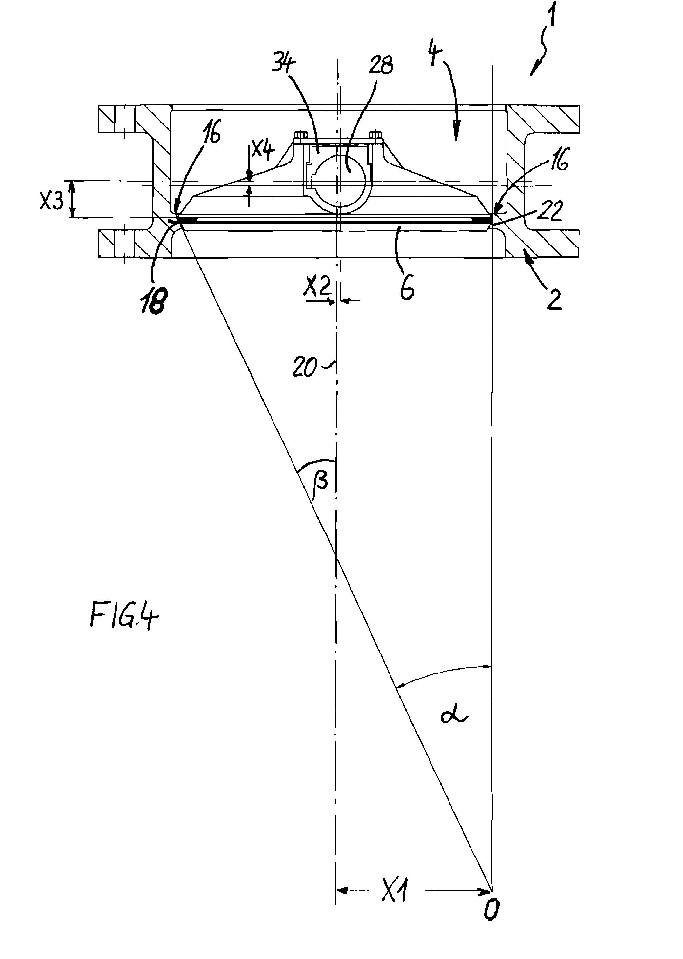

Wie es nun bei derartigen Klappenscheibenventilen grundsätzlich bekannt ist, ist für eine gute Abdichtung eine "dreifach exzentrische" Ausgestaltung vorgesehen. Dies soll speziell anhand der Fig. 4 erläutert werden. Demnach ist zunächst der Dichtsitz 16 des Gehäuses 2 als eine in Schließrichtung der Klappenscheibe 6 im Durchmesser abnehmende Konusfläche 18 mit einem Konuswinkel α ausgebildet, wobei aber der Konuswinkel α bzw. sein Ursprungspunkt 0 zur Längsmittelachse 20 des Durchlasses 4 derart exzentrisch versetzt ist, dass die Konusfläche 18 an einer Umfangsstelle eine im Wesentlichen parallel zur Durchlass-Richtung - und somit senkrecht zur Durchlass-Öffnungsebene - verlaufende, gerade Flächenzone 22 aufweist. Auf der dieser geraden Flächenzone 22 diametral gegenüberliegenden Seite schließt die Konusfläche 18 mit der Längsmittelachse 20 einen maximalen Winkel β ein, und über die übrigen Umfangsbereiche ändert sich der Winkel zwischen der Konusfläche 18 und der Längsmittelachse 20 stetig zwischen Null und dem maximalen Winkel β. Diese "erste Exzentrizität" der Konusfläche 18 ist in Fig. 4 mit X1 veranschaulicht.

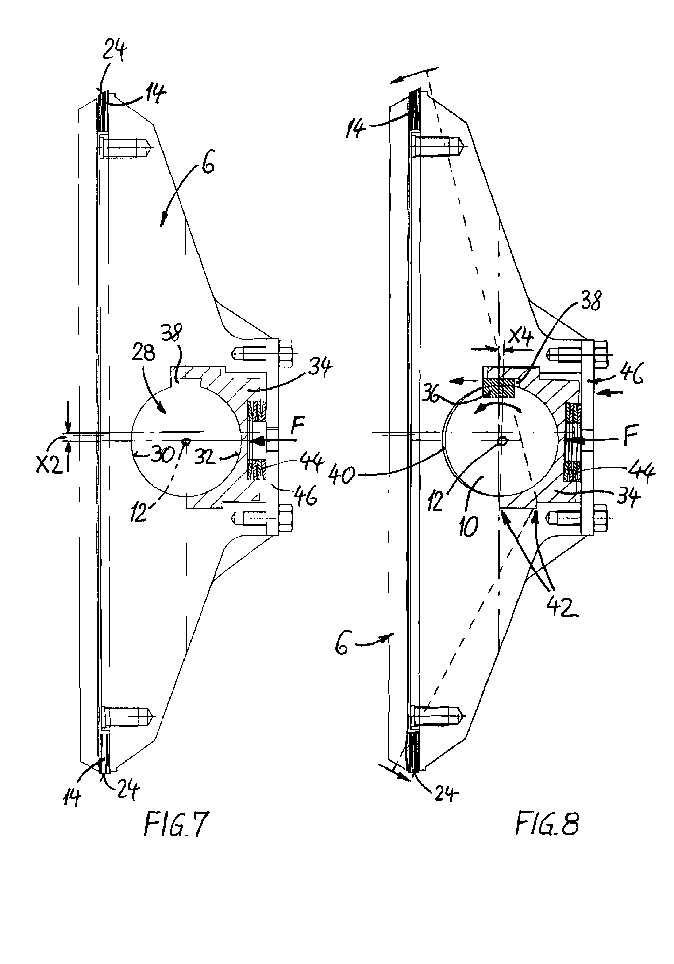

Wie sich insbesondere aus Fig. 7 und 8 ergibt, weist das Dichtelement 14 der Klappenscheibe 6 eine an die Konusfläche 18 entsprechend angepasste Konusfläche 24 auf. Die gerade Flächenzone 22 kann auch als "90°-Seite" bezeichnet werden, weil die Konusfläche 18 hier mit der Schließebene der Klappenscheibe 6 bzw. mit der Öffnungsebene des Durchlasses 4 einen rechten Winkel bildet. Die "90°-Seite" mit der geraden Flächenzone 22 des Dichtsitzes 16 liegt auf einer zur Drehachse 12 senkrechten Querachse der Öffnungsebene, so dass die Klappenscheibe 6 beim Verschwenken in die Absperrstellung mit dem Dichtelement 14 etwa radial gegen die Flächenzone 22 gepresst wird.

Als "zweite Exzentrizität" ist vorgesehen, dass die Drehachse 12 der Welle 10 relativ zur Längsmittelachse 26 der Klappenscheibe 6 um einen Versatz X2 versetzt ist, und zwar insbesondere in Richtung der geraden Flächenzone 22 des Dichtsitzes 16 bzw. des an die Flächenzone 22 angepassten Bereiches des Dichtelementes 14 der Klappenscheibe 6; siehe dazu auch Fig. 7. In der Absperrstellung fallen die Längsmittelachse 20 des Durchlasses 4 und die Längsmittelachse 26 der Klappenscheibe 6 bevorzugt aufeinander.

Wie sich nun weiter aus Fig. 4 ergibt, ist als "dritte Exzentrizität" vorgesehen, dass die Drehachse 12 der Welle 10 relativ zu der von dem Dichtsitz 16 definierten Dichtebene in Durchlass-Richtung versetzt angeordnet ist, und zwar in die Richtung, in der sich die Konusfläche 18 des Dichtsitzes 16 im Durchmesser erweitert. Dieser Versatz ist in Fig. 4 mit X3 eingezeichnet.

Erfindungsgemäß ist nun zusätzlich vorgesehen, dass die Klappenscheibe 6 mit der Welle 10 derart in Wellen-Querrichtung relativbeweglich verbunden ist, dass die Klappenscheibe 6 in der Absperrstellung durch eine weitergehende Drehung der Welle 10 in Schließrichtung relativ zu der axialfest gelagerten Welle 10 weitergehend gegen den Dichtsitz 16 bewegbar ist. Hierbei handelt es sich praktisch um eine zusätzliche Bewegung in einer "vierten Achse", die in Fig. 4, 8 und 9 mit X4 veranschaulicht ist.

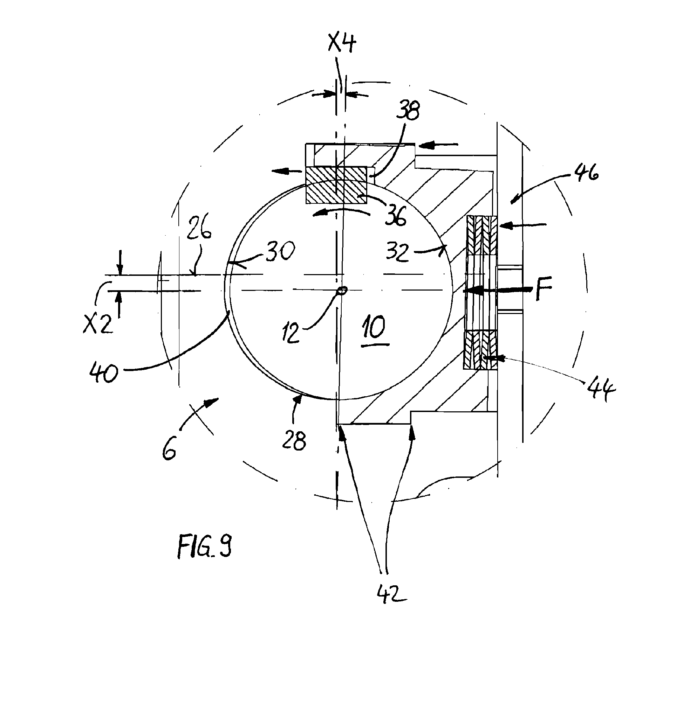

Konstruktiv ist dazu bevorzugt vorgesehen, dass die Welle 10 durch zwei in Wellen-Längsrichtung beabstandete, gleichartige Lageröffnungen 28 der Klappenscheibe 6 verläuft. Jede Lageröffnung 28 ist anteilig von einer Lagerschale 30 der Klappenscheibe 6 und von einer Lagerschale 32 eines gesonderten Lagerdruckstückes 34 gebildet. Jedes Lagerdruckstück 34 ist auf der von dem Dichtsitz 16 wegweisenden Seite angeordnet und mit einer in Richtung der Welle 10 wirkenden Federkraft F beaufschlagt. Die Federkraft F ist so bemessen, dass die Klappenscheibe 6 in ihrem unbelasteten Zustand in der Öffnungsstellung im Wesentlichen spielfrei auf der Welle 10 gehalten ist. Die Welle 10 weist im Bereich jeder Lageröffnung 28 an einer Umfangsstelle ein radial vorstehendes Mitnehmerelement 36 auf, welches derart in eine innerhalb der jeweiligen Lageröffnung 28 zwischen den Lagerschalen 30, 32 der Klappenscheibe 6 und des Lagerdruckstückes 34 gebildete Mitnehmerausnehmung 38 eingreift, dass einerseits die Klappenscheibe 6 drehmomentschlüssig mit der Welle 10 verbunden ist, und dass andererseits in der Absperrstellung über das Mitnehmerelement 36 die Klappenscheibe 6 gegen die Federkraft F von der Welle 10 und dem Lagerdruckstück 34 wegbewegbar ist. Aufgrund der Anordnung des Mitnehmerelementes 36 auf nur einer Umfangsseite der Welle 10 handelt es sich bei dieser Bewegung der Klappenscheibe 6 um eine Schwenkbewegung von der Welle 10 weg, wobei zwischen der dem Lagerdruckstück 34 gegenüberliegenden Seite der Welle 10 und der Lagerschale 30 der Klappenscheibe 6 ein Spalt 40 entsteht; siehe dazu Fig. 8 und 9. Bevorzugt ist das Mitnehmerelement 36 auf derjenigen Seite der Welle 10 angeordnet, die - bezogen auf die Absperrstellung - in die der geraden Flächenzone 22 des Dichtsitzes 16 diametral gegenüberliegende Richtung weist. Zwischen der Klappenscheibe 6 und dem Lagerdruckstück 34 ist einerseits auf der Seite des Mitnehmerelementes 36 ein Bewegungsspiel für die beschriebene Relativbewegung und andererseits auf der etwa diametral gegenüberliegenden Seite ein als Kippachse wirkender Anschlag 42 gebildet. In Fig. 8 und 9 ist weiterhin anhand von eingezeichneten Pfeilen veranschaulicht, dass durch eine weitergehende Drehung der Welle 10 die bereits beschriebene relative (Kipp-) Bewegung zwischen Klappenscheibe 6 und Welle 10 bewirkt wird, wodurch sich die äußere umfangsgemäße Dichtzone der Klappenscheibe 6 in Richtung der ebenfalls eingezeichneten Pfeile weitergehend an den Dichtsitz 16 andrückt. Hierbei ist im Bereich des Mitnehmerelementes 36 ein Bewegungsspielraum von einigen mm in aller Regel ausreichend.

Beim Öffnen des Ventils 1 ausgehend von der Absperrstellung durch Rückdrehung der Welle 10 bewegt sich zunächst die Klappenscheibe 6 mit der Lagerschale 30 durch die Federkraft F wieder zurück gegen die Welle 10, und nachfolgend wird die Klappenscheibe 6 in die Öffnungsstellung verschwenkt.

Als Mitnehmerelement 36 kann eine so genannte Passfeder bzw. ein Keilelement vorgesehen sein, wobei das Mitnehmerelement 36 anteilig in einer nutartigen Ausnehmung der Welle 10 und in der Mitnehmerausnehmung 38 zwischen der Klappenscheibe 6 und dem Lagerdruckstück 34 sitzt.

Die das Lagerdruckstück 34 beaufschlagende Federkraft F kann von einem Federelement 44 erzeugt werden, welches mit Vorspannung zwischen dem Lagerdruckstück 34 und einem fest mit der Klappenscheibe 6 verbundenen Widerlager 46 sitzt. Mit Vorteil kann das Federelement 44 als Tellerfederpaket ausgebildet sein. Die Federkraft F kann im Bereich von 10.000 bis 15.000 N liegen, beispielsweise bei geöffnetem Ventil um 12.500 N und bei geschlossenem Ventil um 15.000 N.

Jedes Lagerdruckstück 34 kann vom Außenumfang der Klappenscheibe 6 her parallel zur Scheibenebene in eine Aufnahme der Klappenscheibe 6 eingeschoben werden. Hierbei ist eine Schiebeverbindung nach Art einer Schwalbenschwanzverbindung oder einer T-Verbindung möglich.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im unabhängigen Anspruch definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

## Patentansprüche

1. Klappenscheibenventil (1) für Druckmedien, bestehend aus einem Gehäuse (2) mit einem Durchlass (4) für das Medium und aus einer als Absperrorgan innerhalb des Durchlasses (4) angeordneten Klappenscheibe (6), die über eine zweiseitig drehbar gelagerte und sich quer durch den Durchlass (4) erstreckende Welle (10) um eine Drehachse (12) derart verschwenkbar ist, dass sie in einer Öffnungsstellung mit ihrer Scheibenebene etwa entsprechend der Durchlass-Richtung ausgerichtet ist und in einer quer zur Durchlass-Richtung stehenden Absperrstellung umfangsgemäß dichtend mit einem gehäuseseitigen Dichtsitz (16) zusammenwirkt,
**dadurch gekennzeichnet, dass** dieKlappenscheibe(6)mitder Welle (10) derart in Wellen-Querrichtung relativbeweglich verbunden ist, dass die Klappenscheibe (6) in der Absperrstellung durch eine weitergehende Drehung der Welle (10) relativ zu der axialfest gelagerten Welle (10) weitergehend gegen den Dichtsitz (16) bewegbar ist.

2. Klappenscheibenventil nach Anspruch 1,
**dadurch gekennzeichnet, dass** dieWelle(10)durch mindestens eine Lageröffnung (28) der Klappenscheibe (6), vorzugsweise durch zwei in Wellen-Längsrichtung beabstandete, gleichartige Lageröffnungen (28), verläuft, wobei die/jede Lageröffnung (28) anteilig von einer Lagerschale (30) der Klappenscheibe (6) und einer Lagerschale (32) eines gesonderten Lagerdruckstückes (34) gebildet ist, wobei das Lagerdruckstück (34) auf der von dem Dichtsitz (16) wegweisenden Seite angeordnet und mit einer in Richtung der Welle (10) wirkenden Federkraft (F) beaufschlagt ist.

3. Klappenscheibenventil nach Anspruch 2,
**dadurch gekennzeichnet, dass** dieWelle(10)aneiner Umfangsstelle ein radial vorstehendes Mitnehmerelement (36) aufweist, welches derart in eine innerhalb der Lageröffnung (28) zwischen den Lagerschalen (30, 32) der Klappenscheibe (6) und des Lagerdruckstückes (34) gebildete Mitnehmerausnehmung (38) eingreift, dass einerseits die Klappenscheibe (6) drehmomentschlüssig mit der Welle (10) verbunden ist, und dass andererseits in der Absperrstellung über das Mitnehmerelement (36) die Klappenscheibe (6) gegen die Federkraft (F) von der Welle (10) und dem Lagerdruckstück (34) weg gegen den Dichtsitz (16) bewegbar ist.

4. Klappenscheibenventil nach einem der Ansprüche 1 bis 3,
**dadurch gekennzeichnet, dass** derDichtsitz(16)des Gehäuses (2) als eine in Schließrichtung im Durchmesser abnehmende Konusfläche (18) mit einem Konuswinkel (α) ausgebildet ist, wobei der Konuswinkel (α) zur Längsmittelachse (20) des Durchlasses (4) derart exzentrisch ausgebildet ist, dass die Konusfläche (18) an einer Umfangsstelle des Dichtsitzes (16) eine im Wesentlichen parallel zur Durchlass-Richtung verlaufende, gerade Flächenzone (22) aufweist.

5. Klappenscheibenventil nach einem der Ansprüche 1 bis 4,
**dadurch gekennzeichnet, dass** dieDrehachse(12)derWelle (10) relativ zur Längsmittelachse (26) der Klappenscheibe (6) exzentrisch versetzt ist, und zwar insbesondere in Richtung der geraden Flächenzone (22) des Dichtsitzes (16).

6. Klappenscheibenventil nach einem der Ansprüche 1 bis 5,
**dadurch gekennzeichnet, dass** dieDrehachse(12)derWelle (10) relativ zu einer von dem Dichtsitz (16) definierten Dichtebene in Durchlass-Richtung versetzt angeordnet ist.

7. Klappenscheibenventil nach Anspruch 3 und einem der Ansprüche 4 bis 6, **dadurch gekennzeichnet, dass** dasMitnehmerelement(36)auf der Seite der Welle (10) angeordnet ist, die in die der geraden Flächenzone (22) des Dichtsitzes (16) diametral gegenüberliegende Richtung weist.

8. Klappenscheibenventil nach einem der Ansprüche 3 bis 7,
**dadurch gekennzeichnet, dass** zwischen der Klappenscheibe (6) und dem Lagerdruckstück (34) einerseits auf der Seite des Mitnehmerelementes (36) ein Bewegungsspielraum für die Relativbewegung und andererseits auf der etwa diametral gegenüberliegenden Seite ein als Kippachse wirkender Anschlag (42) gebildet ist.

9. Klappenscheibenventil nach einem der Ansprüche 2 bis 8,
**dadurch gekennzeichnet, dass** die das Lagerdruckstück (34) beaufschlagende Federkraft (F) von einem mit Vorspannung zwischen dem Lagerdruckstück (34) und einem fest mit der Klappenscheibe (6) verbundenen Widerlager (46) sitzenden Federelement (44) erzeugt wird, wobei das Federelement (44) insbesondere als Tellerfederpaket ausgebildet ist.
